# EUROPEAN PATENT APPLICATION

(11) **EP 4 387 245 A1**
(43) Date of publication of application: **19.06.2024**
(21) Application number: 22874718.4
(22) Date of filing: 21.09.2022
(51) Int. Cl.: H04N 21/4725

(54) **VIDEO LIST DISPLAY METHOD AND APPARATUS, AND ELECTRONIC DEVICE AND STORAGE MEDIUM**

(30) Priority: 28.09.2021 CN 202111146460
(71) Applicant: Beijing Zitiao Network Technology Co., Ltd., Beijing 100190 (CN)
(72) Inventor: CHEN, Di, Beijing 100086 (CN); ZHENG, Yixin, Beijing 100086 (CN); GUAN, Sainan, Beijing 100086 (CN); SHEN, Zhou, Beijing 100086 (CN); CHEN, Zhuli, Beijing 100086 (CN)
(74) Representative: Dentons UK and Middle East LLP
(86) International application number: PCT/CN2022/120058
(87) International publication number: WO 2023/051331

(57) **Abstract**

Provided in the embodiments of the present disclosure are a video list display method and apparatus, and an electronic device and a storage medium. The method comprises: in response to a list display operation, displaying, in a list display area of a video playing page and in an unfolded state, a video list corresponding to the list display operation, wherein the video playing page further includes a video playing area for playing a video, and when the video list is in the unfolded state, the list display area has a first display size; and in response to a list folding instruction, switching the video list from the unfolded state to a folded state, wherein when the video list is in the folded state, the list display area has a second display size, and the second display size is smaller than the first display size.

## Description

The present application claims the priority right of the Chinese patent application No. 202111146460.1 filed on September 28, 2021, the disclosure of which is incorporated herein by reference in its entirety.

### FIELD

Embodiments of the present disclosure relate to the field of computer technology, for example, to a video list display method, apparatus, electronic device and storage medium.

### BACKGROUND

At present, different types of videos may be played in various pages, e.g., playing recommended videos in the recommendation page, playing hotspot videos in the hotspot page, and playing videos posted by other publishers followed by the user in the follow page and the like.

However, in the existing technology related to video playing, users need to switch to corresponding pages to watch the videos in these pages. That is, the operation path is relatively long, which makes it inconvenient for the users to watch the videos.

### SUMMARY

Embodiments of the present disclosure provide a video list display method, apparatus, electronic device and storage medium, to display a list corresponding to videos in other pages while watching the videos.

In a first aspect, the embodiments of the present disclosure propose a method for displaying a video list, comprising: in response to a list display operation, displaying the video list corresponding to the list display operation in an unfolded state in a list display area of a video play page, wherein the video play page further includes a video play area for video playing, and the list display area has a first display size when the video list is in the unfolded state; and in response to a list folding instruction, switching the video list from the unfolded state to a folded state, wherein the list display area has a second display size when the video list is in the folded state, the second display size being smaller than the first display size.

In a second aspect, the embodiments of the present disclosure propose an apparatus for displaying a video list, comprising: a list display module for displaying, in response to a list display operation and in a list display area of a video play page, the video list corresponding to the list display operation in an unfolded state, wherein the video play page further includes a video play area for video playing, and the list display area has a first display size when the video list is in the unfolded state; and a list folding module for switching, in response to a list folding instruction, the video list from the unfolded state to a folded state, wherein the list display area has a second display size when the video list is in the folded state, the second display size being smaller than the first display size.

In a third aspect, the embodiments of the present disclosure propose an electronic device, comprising: at least one processor; and a memory configured to store at least one program; the at least one program, when executed by the at least one processor, causing the at least one processor to implement the method for displaying a video list according to the embodiments of the present disclosure.

In a fourth aspect, the embodiments of the present disclosure also propose a computer readable storage medium having a computer program stored thereon, the computer program, when executed by a processor, implementing the method for displaying a video list according to the embodiments of the present disclosure.

### BRIEF DESCRIPTION OF THE DRAWINGS

Throughout the drawings, same or similar reference signs indicate same or similar elements. It should be appreciated that the drawings are schematic and the original components and the elements are not plotted by a given ration.
Fig. 1 illustrates a flow diagram of a method for displaying a video list in accordance with embodiments of the present disclosure;
Fig. 2 illustrates a schematic diagram of a video play page in accordance with embodiments of the present disclosure;
Fig. 3 illustrates a schematic diagram of a posted video list in accordance with embodiments of the present disclosure;
Fig. 4 illustrates a schematic diagram of a topic video list in accordance with embodiments of the present disclosure;
Fig. 5 illustrates a schematic diagram of a collection video list in accordance with embodiments of the present disclosure;
Fig. 6 illustrates a schematic diagram of a hotspot video list in accordance with embodiments of the present disclosure;
Fig. 7 illustrates a schematic diagram of a video list displayed in a folded state in accordance with embodiments of the present disclosure;
Fig. 8 illustrates a flow diagram of a further method for displaying a video list in accordance with embodiments of the present disclosure;
Fig. 9 illustrates a schematic diagram of a further video play page in accordance with embodiments of the present disclosure;
Fig. 10 illustrates a schematic diagram of display of comment contents in accordance with embodiments of the present disclosure;
Fig. 11 illustrates a flow diagram of another method for displaying a video list in accordance with embodiments of the present disclosure;
Fig. 12 illustrates a schematic diagram of a further collection video list in accordance with embodiments of the present disclosure;
Fig. 13 illustrates a schematic diagram of location tags in accordance with embodiments of the present disclosure;
Fig. 14 illustrates a schematic diagram of further location tags in accordance with embodiments of the present disclosure;
Fig. 15 illustrates a structural diagram of an apparatus for displaying a video list in accordance with embodiments of the present disclosure;
Fig. 16 illustrates a structural diagram of an electronic device in accordance with embodiments of the present disclosure.

### DETAILED DESCRIPTION OF EMBODIMENTS

Embodiments of the present disclosure will be described below in more details with reference to the drawings.

It should be appreciated that various steps disclosed in the method implementations of the present disclosure may be executed in different orders, and/or in parallel. Besides, the method implementations may include additional steps and/or omit the illustrated ones. The scope of the present disclosure is not restricted in this regard.

The term "includes" and its variants are to be read as open-ended terms that mean "includes, but is not limited to." The term "based on" is to be read as "based at least in part on." The term "one embodiment" is to be read as "at least one embodiment." The term "a further embodiment" is to be read as "at least one further embodiment." The term "some embodiments" is to be read as "at least some embodiments." Definitions related to other terms will be provided in the following description.

It is noted that the terms "first", "second" and so on mentioned in the present disclosure are provided only to distinguish different apparatuses, modules or units, rather than limiting the sequence of the functions executed by these apparatuses, modules or units or dependency among the apparatuses, modules or units.

It is reminded here that the modifications including "one" and "more" in the present disclosure are schematic and non-restrictive. Those skilled in the art should understand that the above modifications are to be interpreted as "one or more" unless indicated otherwise in the context.

Names provided for messages or information exchanged between multiple apparatuses in the implementations of the present disclosure are only for explanatory purposes, rather than being restrictive.

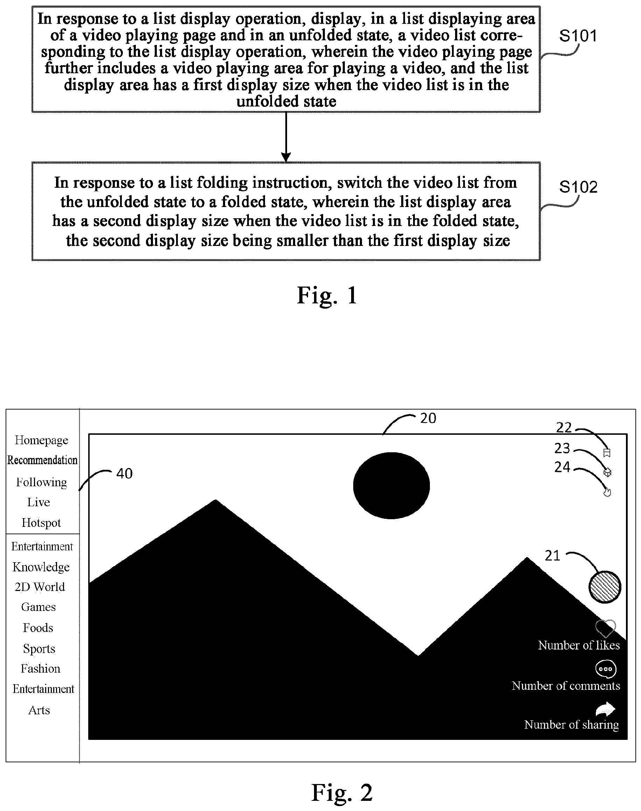

Fig. 1 illustrates a flow diagram of a video list display method in accordance with embodiments of the present disclosure. The method may be executed by a display apparatus of the video list, wherein the apparatus may be implemented by software and/or hardware and configured in an electronic device. Typically, the display apparatus may be configured in a computer device. The video list display method in accordance with the embodiments of the present disclosure is adapted to scenarios where video lists are displayed in a video play page. As shown in Fig. 1, the video list display method in accordance with the embodiments may include:
S101: in response to a list display operation, displaying, in a list display area of a video play page, the video list corresponding to the list display operation in an unfolded state, wherein the video play page further includes a video play area for video playing, and the list display area has a first display size when the video list is in the unfolded state.

Wherein the list display operation may be a trigger operation that instructs an electronic device to display a video list associated with the currently playing video, such as an operation that triggers corresponding video controls of the currently playing video as displayed in the video play area. The video play area may be an area in the video play page for playing videos. The list display area may be an area in the video play page for displaying the video list. The video list may be a list of videos posted by the publisher of the currently playing video (i.e., posted video list), a list of videos under a video topic where the currently playing video is located (i.e., topic video list), a list of videos in a video collection where the currently playing video is located (i.e., collection video list), or a list of video in a hotspot list where the currently playing video is located (i.e., hotspot video list) etc. The video list may correspondingly include video items of respective videos, and the video items of one video may be video information of the video, e.g., video cover of the video, video name and/or the number of likes etc.

As an example, the electronic device displays a video play page and plays a video in the video play area of the video play page. Accordingly, when a user intends to view a certain video list related to the current video, a list display operation may be performed to view the video list, e.g., corresponding control displayed in the video play area is triggered. Correspondingly, upon detecting a list display operation executed by the user, the electronic device displays, in response to the list display operation, a video list corresponding to the trigger operation in the unfolded state within the video play area of the video play page. For example, the video list corresponding to the controls triggered by the user is displayed in the unfolded state within the video play area of the video play page.

In this embodiment, the video list to be displayed may be determined according to the list display operation performed by the user. Optionally, when the list display operation is performed on first publisher information displayed within the video play area, the video list is a posted video list from a publisher of a currently playing video; or when the list display operation is performed on a topic control, the video list is a topic video list of videos with a topic where the currently playing video is located; or when the list display operation is performed on a collection control, the video list is a collection video list of collection videos where the currently playing video is located; or when the list display operation is performed on a hotspot control, the video list is a hotspot video list.

Wherein the currently playing video may be a video being played in the video play page at the moment. The first publisher information may be information of the publisher of the currently playing video as displayed in the video play area, such as a profile photo of the publisher of the currently playing video etc. The topic control/collection control/hotspot control may be a control that is displayed in the video play area and instructs an electronic device to display a topic video list/collection video list/hotspot video list corresponding to the currently playing video. The above control may be displayed when the currently playing video is a video in video topic/video collection/hotspot list.

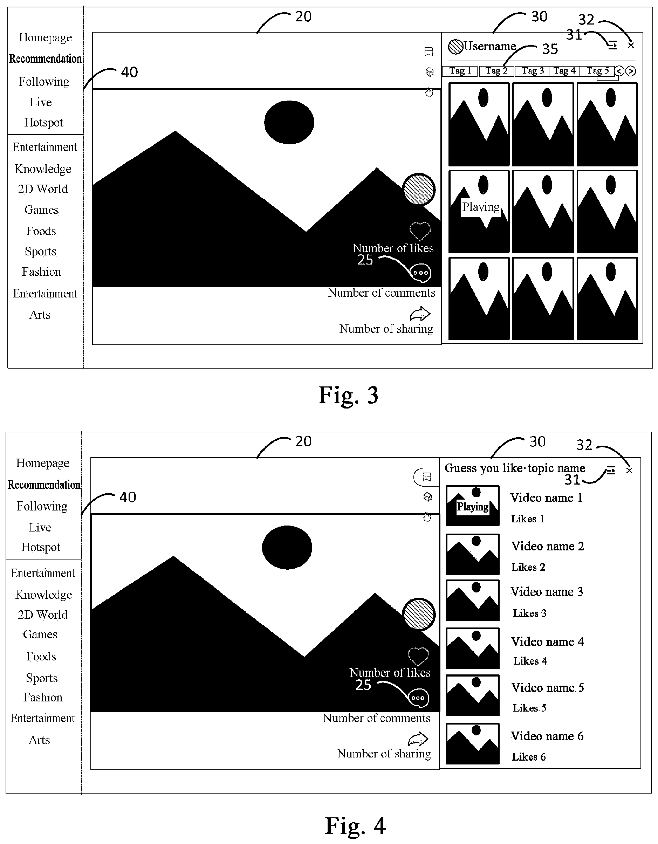

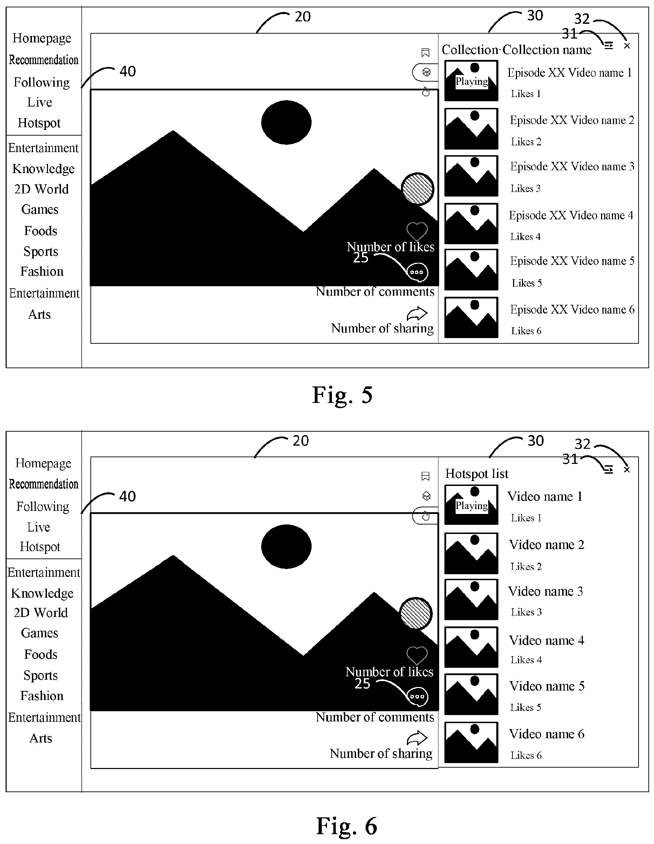

As an example, according to Fig. 2, the electronic device displays the video play page, plays a video in the video play area 20 of the video play page and displays the publisher information of the currently playing video, e.g., displaying a profile photo 21 of the publisher of the currently playing video; and when the currently playing video is a video in video collection/hotspot list/video topic, the topic control 22/collection control 23/hotspot control 24 of the currently playing video is displayed in the video play area. When the user intends to view other videos posted by the publisher of the currently playing video, it may trigger the publisher information; when the user intends to view other video in the same video topic where the currently playing video is located, the topic control 22 may be triggered; when the user intends to view other videos in the same video collection where the currently playing video is located, the collection control 23 may be triggered; when the user intends to view other videos in the hotspot list, the hotspot control 24 may be triggered. Correspondingly, upon detecting that the user triggers the publisher information displayed in the video play area, the electronic device may display the video list posted by the publisher of the currently playing video in the unfolded state within the list display area 30, as shown in Fig. 3; upon detecting that the user triggers the topic control 22 displayed in the video play area, the electronic device may display the topic video list of the video topic where the currently playing video is located in the unfolded state within the list display area 30, as demonstrated in Fig. 4; upon detecting that the user triggers the collection control 23 displayed in the video play area, the electronic device may display the collection video list of the video collection where the currently playing video is located in the unfolded state within the list display area 30, as illustrated in Fig. 5; upon detecting that the user triggers the hotspot control 24 displayed in the video play area, the electronic device may display the hotspot video list corresponding to the hotspot list in the unfolded state within the list display area 30 according to Fig. 6. Therefore, by triggering video items of a certain video in the posted video list/topic video list/collection video list/hotspot video list displayed in the list display area 30, the user may instruct the electronic device to play this video in the video play area.

Besides, upon detecting that the user moves the cursor into a corresponding area of the topic control/collection control/hotspot control displayed in the video play area, the electronic device may display the control information (such as information about control name and/or introduction of control functions etc.) of the topic control/collection control/hotspot control, allowing the user to understand the function of the corresponding control.

As illustrated in Figs. 2-6, when the currently playing video is not in a full-screen play state, that is, in case of not receiving a full-screen play operation, the video play page may also include a tag display area 40. Therefore, the user may instruct the electronic device to display the page corresponding to the corresponding page tag by triggering the page tag displayed in the tag display area 40. For example, the user instructs the electronic device to display the homepage by triggering the homepage tag; the user instructs the electronic device to display a recommendation page on which the recommended video plays by triggering the recommendation tag; the user instructs the electronic device to display a following page on which videos posted by other users followed by the user play by triggering a follow tag; the user instructs the electronic device to display a live streaming page by triggering a live streaming tag; the user instructs the electronic device to display a hotspot page on which hotspot videos play by triggering a hotspot tag; or the user instructs the electronic device to display a corresponding topic page on which videos corresponding to the respective video topic play by triggering a certain topic tag.

As demonstrated in Figs. 3-6, the video list in the unfolded state may display a folding control 31 and a closing control 32, such that the user may instruct the electronic device to switch the video list to the folded state by triggering the folding control 31, and also may instruct the electronic device to close the video list by triggering the closing control 32.

In this embodiment, on the basis of a trigger operation by the user within the video play area, a video related to the currently playing video is displayed in the current page without switching to other pages and interrupting the currently playing video. Accordingly, the user can view the video list while watching the currently playing video and switch the currently playing video based on the video list. Therefore, the operations for the user to view the video list associated with the currently playing video (especially the currently playing short video) are simplified and the viewing experience of the user is enhanced.

S102: in response to a list folding instruction, the video list is switched from the unfolded state to a folded state, wherein the list display area has a second display size when the video list is in the folded state, the second display size being smaller than the first display size.

Wherein the list folding instruction may be appreciated as an instruction to fold the video list displayed in the list display area. The list folding instruction may be generated based on the list folding operation performed by the user, or it may be automatically generated when the current conditions meet the preset folding conditions of the video list. The first display size may be understood as the display size of the list display area on the video play page while the video list is in the unfolded state; and the second display size may be the display size of the list display area in the video play page when the video list is in the folded state, size. The second display size may be smaller than the first display size. For example, when the list display area is located on the left or right side of the video play area, the width value in the second display size may be smaller than that in the first display size; when the list display area is located on the upper or lower side of the video play area, the height value in the second display size may be smaller than that in the first display size. The following description is provided in a case where the list display area is located on the right side of the video play are as an example.

In this embodiment, the video list may have two display states, i.e., unfolded state and folded state. The detailed information of the video list may be displayed when it is in the unfolded state. Besides, while the user's need for switching videos is satisfied, the video list in the folded state may occupy less space of the video play page, such that the video play area has a relatively large size to facilitate the user to watch the video images clearly.

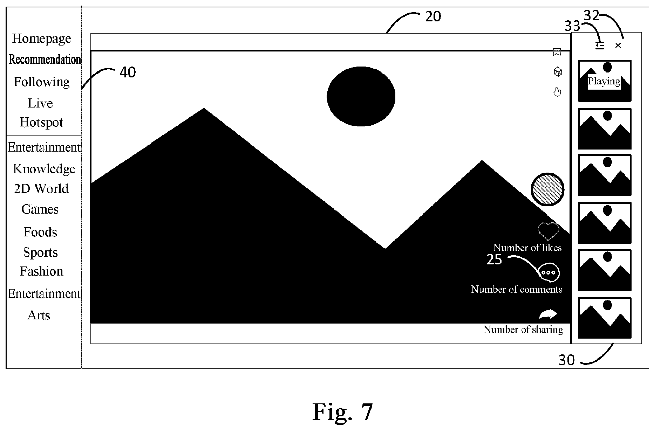

As an example, when the user intends to fold the video list displayed in the list display area, he/she may perform the list folding operation, i.e., triggering the folding control in the video list. Upon detecting the list folding operation by the user, the electronic device may generate the list folding instruction. Alternatively, when the current conditions meet the preset folding conditions of the video list, the electronic device may automatically generate the list folding instruction while for example switching the currently playing video to other videos in the video list. Therefore, in response to a list folding instruction, the electronic device may switch the video list from the unfolded state to the folded state, display video covers of a plurality of videos in the video list in a unidirectional queue within the video list switched to the folded state, and reduce the size of the list display area 30 in accordance with the size of the switched video list, as illustrated in Fig. 7.

Additionally, according to Fig. 7, the video list, when in the folded state, may display an unfolding control 33 and a closing control 32, such that the user may instruct the electronic device to switch the video list to the unfolded state by triggering the unfolding control 33, and also may instruct the electronic device to close the video list by triggering the closing control 32, i.e., the display of the video list is canceled.

In this embodiment, the list display area may be located inside or outside the video play area, i.e., the video list may be displayed on top of the layer of the video play area where video images are displayed, or in the same layer of the video play area where the video images are displayed.

When the list display area is located outside the video play area, the size of the video play area may be adjusted in accordance with the display size of the list display area is displayed and the display size of the list display area. At this moment, optionally, before displaying the video list corresponding to the list display operation in the unfolded state in the list display area of the video play page, the method further comprises: creating in the video play page the list display area of the first display size and adjusting the display size of the video play area according to the first display size; after switching the video list from the unfolded state to the folded state, the method further comprising: adjusting the display size of the video play area according to the second display size.

As an example, upon receiving the list display operation, the electronic device may create the list display area 30 of the first display size at a preset position (e.g., right side of the video play page) of the video play page, display the video list corresponding to the list display operation in the unfolded state within the list display area 30 and reduce the display size of the video play area 20 in accordance with the display size (i.e., the first display size) of the list display area, according to Figs. 3-6. Upon receiving the list folding instruction, the electronic device may switch the video list displayed in the list display area 30 from the unfolded state to the folded state in response to the above instruction, reduce the display size of the list display area 30 from the first size to the second size, and expand the display size of the video play area 20 in accordance with the display size (i.e., the second display size) of the reduced list area display 30, as shown in Fig. 7.

In one implementation, the method further comprises, before adjusting the video list from the unfolded state to the folded state in response to a list folding instruction: in response to a video switching instruction for switching from a currently playing video to a target video, generating a list folding instruction and switching from the currently playing video to the target video, wherein a video item of the target video is located in the video list and differs from videos played in the video play area before switching.

Wherein the video switching instruction may be an instruction that instructs the electronic device to switch the currently playing video of the video play area in accordance with the video list. The video switching instruction may be generated based on the video switch operation triggered by the user, or it may be automatically generated when the current conditions meet the preset conditions for automatically switching the video. The target video may be the video to which the currently playing video is switched as instructed by the video switching instruction. Besides, it may also be a video in the video play list different from the video played in the video play area before the switching, i.e., the target video is different from the video played in the video play area before the switching and is also located in the video list.

In the above implementation, when the video list is in an enabled state (including both unfolded state and folded state), the currently playing video in the video play area may be switched based on the video list. While the currently playing video in the video play area is switched based on the video list, the video list may be automatically folded to facilitate the user to watch the video images.

As an example, when intending to switch the currently playing video to a video corresponding to a given video item displayed in the video list, the user may trigger the video item, e.g., the cover of the video. If intending to switch the currently playing video to other videos corresponding to video items adjacent to the video item of the currently playing video in the video list, the user may scroll the mouse wheel back and forth or trigger the corresponding direction keys in the keyboard.

Therefore, upon detecting that the user triggers other video items in the video list apart from the video item of the currently playing video within the video play area or the user scrolls the mouse wheel back and forth or triggers the corresponding direction keys in the keyboard, the electronic device may take the corresponding video as the target video and generate the video switching instruction; alternatively, when the autoplay function is enabled by the user and the currently playing video in the video play area has played out, the electronic device may regard a video corresponding to a video item adjacent to the video item of the currently playing video in the video list and positioned next to the video item of the currently playing video as the target video and automatically generate the video switching instruction.

Correspondingly, after generating the video switching instruction, the electronic device may play the target video in the video play area in response to the video switching instruction. When the video list displayed in the list display area is in the unfolded state, the electronic device generates a list folding instruction and adjusts the video list from the unfolded state to the folded state in response to the list folding instruction.

Moreover, when the video to be switched as instructed by the video switching instruction is not the video in the video list, the video switching may be performed in response to the video switching instruction and the video list is closed.

The method for displaying a video list in accordance with this embodiment comprises: in response to a list display operation, displaying, in a list display area of a video play page, the video list corresponding to the list display operation in an unfolded state, wherein the video play page further includes a video play area for video playing, and the list display area has a first display size when the video list is in the unfolded state; in response to a list folding instruction, switching the video list from the unfolded state to a folded state, wherein the list display area has a second display size when the video list is in the folded state, the second display size being smaller than the first display size. Through the above technical solution of the embodiment, the video list is displayed in different display states. On the condition that the video list is displayed, the influence on the video play area by the display of the video list is minimized, so as to satisfy the user's need of viewing the video list while watching the videos. In addition, since the video list is displayed, the user can view the video information of the videos in other pages without switching pages while the video is played in the currently displayed video play page. Therefore, the operations for the user to watch different types of videos are simplified and the viewing experience of the user is enhanced.

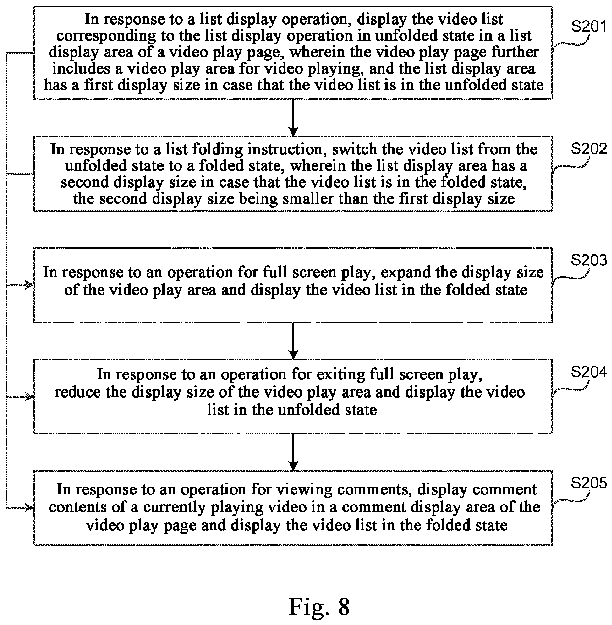

Fig. 8 is a flow diagram of a further method for displaying a video list in accordance with the embodiments of the present disclosure. The solution of this embodiment may be combined with at least one optional solution in the above embodiment. Optionally, the video playing method in accordance with this embodiment also comprises: in response to an operation for full screen play, expanding the display size of the video play area and displaying the video list in the folded state; and/or in response to an operation for exiting full screen play, reducing the display size of the video play area and displaying the video list in the unfolded state.

Optionally, the video playing method in accordance with this embodiment also comprises: in response to an operation for viewing comments, displaying comment contents of a currently playing video in a comment display area of the video play page and displaying the video list in the folded state.

Correspondingly, as shown in Fig. 8, the method for displaying a video list in accordance with this embodiment may comprise:
S201: in response to a list display operation, displaying the video list corresponding to the list display operation in an unfolded state in a list display area of a video play page, and executing S202, S203, S204 or S205, wherein the video play page further includes a video play area for video playing, and the list display area has a first display size when the video list is in the unfolded state.
S202: in response to a list folding instruction, switching the video list from the unfolded state to a folded state and executing S203, S204 or S205, wherein the list display area has a second display size when the video list is in the folded state, the second display size being smaller than the first display size.
S203: in response to an operation for full screen play, expanding the display size of the video play area and displaying the video list in the folded state.

Wherein the operation for full screen play may be an operation for triggering play of the video in the full screen play mode, e.g., the operation for triggering the full screen control displayed in the video play area.

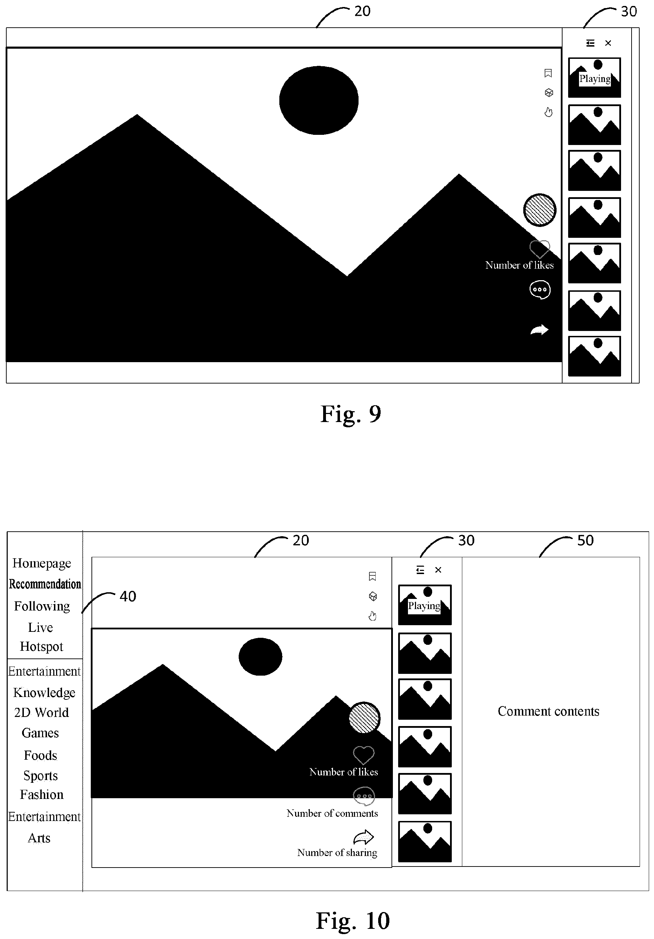

As an example, according to Figs. 3-7, the electronic device displays the video list in the unfolded state or the folded state within the list display area 30 and plays the video in a non-full screen play mode within the video play area 20. Accordingly, when intending to expand the size of the video play area 20, e.g., watching the video in the full screen mode, the user may trigger the full screen control (not shown) in the video play area 20. Correspondingly, upon detecting that the user triggers the full screen control, the electronic device may determine that the full screen play operation is received. In response to the full screen play operation, the video list is displayed in the folded state. For example, if the video list is in the unfolded state, the video list is switched from the unfolded state to the folded state and the display size of the list display area 30 is correspondingly adjusted. If the video list is in the folded state, the video list is continued to be displayed in the folded state. The display size of the video play area 20 is expanded in accordance with the display size of the list display area 30. For example, the area in a main display area of the video play page, apart from the list display area 30, is considered as the video play area 20, and the video is played in the expanded video play area 20 as shown in Fig. 9.

S204: in response to an operation for exiting full screen play, reducing the display size of the video play area and displaying the video list in the unfolded state.

Wherein the operation for exiting full screen play may be an operation for triggering play of the video in the non-full screen play mode, e.g., the operation for triggering the control for exiting the full screen play displayed in the video play area.

As an example, the electronic device plays the video in the full screen play mode within the video play page and displays the video list in the unfolded state within the list display area (for a scenario where the user executes the list display operation in the full screen play mode); or the electronic device displays the video list in the folded state within the list display area (as shown in Fig. 9). Accordingly, when intending to exit the full screen play mode, the user may trigger the control for exiting the full screen play in the video play area (not illustrated in Fig. 9). Correspondingly, upon detecting that the user triggers the control for exiting the full screen play, the electronic device may determine the reception of the operation for exiting the full screen play. In response to the operation for exiting the full screen play, the electronic device reduces the display size of the video play area, e.g., restoring the contents displayed in the main display area of the video play page to a state prior to the full screen play mode, and displays the video list in the unfolded state. For example, when the video list is in the folded state, the video list is switched from the folded state to the unfolded state and the display size of the list display area is correspondingly adjusted. However, if the video list is in the unfolded state, the electronic device continues to display the video list in the unfolded state. The electronic device reduces the display size of the video play area in accordance with the display size of the list display area and the size of other contents displayed in the video play page (e.g., display size of the tag display area), and plays the video in the reduced video play area.

S205: in response to an operation for viewing comments, displaying comment contents of a currently playing video in a comment display area of the video play page and displaying the video list in the folded state.

Wherein the operation for viewing comments may be an operation for viewing comment contents of the currently playing video, e.g., an operation for triggering the comment control of the currently playing video. The comment display area may be an area for displaying the comment contents of the currently playing video.

As an example, according to Figs. 3-7, the electronic device displays the video list in the unfolded state or the folded state within the list display area 30. When intending to view the comment contents of the currently playing video and/or comment on the currently playing content, the user may trigger the comment control 25 of the currently playing video. Correspondingly, upon detecting that the user triggers the comment control 25 of the currently playing video, the electronic device may determine the reception of the operation for viewing comments. In response to the operation for viewing comments, comment contents of a currently playing video are displayed in the comment display area 50 of the video play page and the video list is displayed in the folded state. For example, when the video list is in the unfolded state, the video list is switched from the unfolded state to the folded state and the display size of the list display area 30 is correspondingly adjusted. However, if the video list is in the folded state, the electronic device continues to display the video list in the folded state as demonstrated in Fig. 10.

In this embodiment, the comment display area may be located inside or outside the video play area, i.e., the comment contents of the currently playing video may be displayed on top of the layer of the video play area where video images are displayed, or in the same layer of the video play area where the comment contents of the currently playing video are displayed.

When the list display area is located outside the video play area, the size of the video play area may be adjusted in accordance with the display size of the comment display area is displayed and the display size of the list display area. At this moment, optionally, before displaying the comment contents of the currently playing video in the comment display area of the video play page the method further comprises: creating the comment display area of a third display size in the video play page; the method for displaying a video list in accordance with this embodiment also comprises: adjusting the display size of the video play area according to the second display size and the third display size, wherein the third display size may be the display size of the comment display area, or it may be configured as required.

As an example, upon receiving the operation for displaying comments, the electronic device may create the comment display area 50 of the third display size at a preset position (e.g., right side of the video play page) of the video play page in response to the operation for displaying comments, display the comment contents of the currently playing video in the comment display area 50, display the video list in the folded state between the comment display area 50 and the video play area 20, and reduce the display size of the video play area 20 in accordance with the display size (i.e., the second display size) of the list display area 30 and the display size (i.e., the third display size) of the comment display area 50, according to Fig. 10.

The method for displaying a video in accordance with this embodiment comprises: upon reception of the operation for full screen play, displaying the video list in the folded state and expanding the display size of the video play area; upon reception of the operation for exiting full screen play, displaying the video list in the unfolded state and reducing the display size of the video play area; upon reception of the operation for viewing comments, displaying the video list in the folded state and displaying comment contents of a currently playing video. Therefore, the user's need for watching videos in full screen and/or viewing the comment contents of the currently playing video while the video list is displayed can be satisfied and the viewing experience of the user is also enhanced.

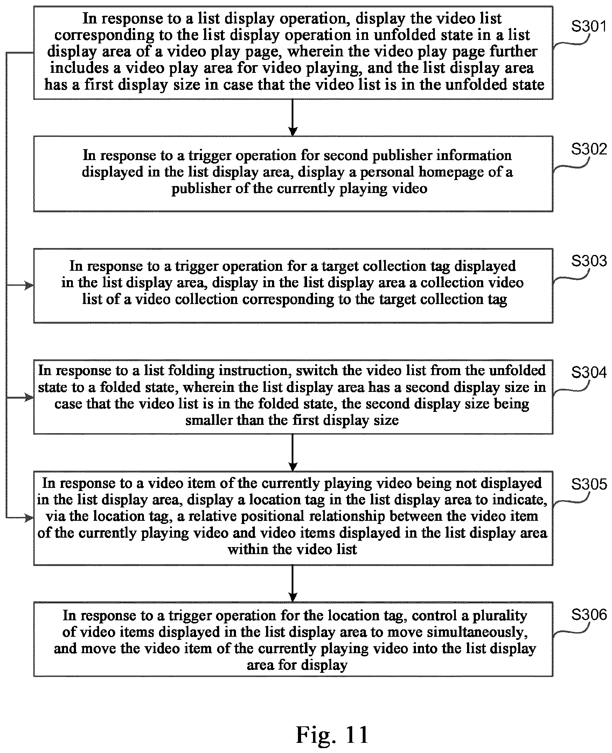

Fig. 11 is a flow diagram of a further method for displaying a video list in accordance with the embodiments of the present disclosure. The solution of this embodiment may be combined with at least one optional solution in the above embodiment. Optionally, the video list may be the posted video list, and the method for displaying a video list in accordance with this embodiment of the present disclosure also comprises: in response to a video item of the currently playing video being not displayed in the list display area, displaying a location tag in the list display area to indicate, via the location tag, a relative positional relationship between the video item of the currently playing video and video items displayed in the list display area within the video list.

Optionally, the method further comprises, after displaying the location tag in the list display area: in response to a trigger operation for the location tag, controlling a plurality of video items displayed in the list display area to move simultaneously, and moving the video item of the currently playing video into the list display area for display.

Optionally, the video list is the posted video list, and the method for displaying a video list in accordance with this embodiment further comprises: in response to a trigger operation for second publisher information displayed in the list display area, displaying a personal homepage of a publisher of the currently playing video.

Optionally, the video list is the posted video list, and the method for displaying a video list in accordance with this embodiment further comprises: in response to a trigger operation for a target collection tag displayed in the list display area, displaying in the list display area a collection video list of a video collection corresponding to the target collection tag.

Correspondingly, as shown in Fig. 11, the method for displaying a video list in accordance with this embodiment may comprise:
S301: in response to a list display operation, displaying the video list corresponding to the list display operation in an unfolded state in a list display area of a video play page, and executing S302, S303, S304 or S305, wherein the video play page further includes a video play area for video playing and the video list is the posted video list, and the list display area has a first display size when the video list is in the unfolded state.
S302: in response to a trigger operation for second publisher information displayed in the list display area, displaying a personal homepage of a publisher of the currently playing video. The operation ends.

Wherein the second publisher information may be the information of the publisher of the currently playing video as displayed in the list display area, e.g., profile photo and/or user name of the publisher of the currently playing video etc.

As an example, according to Fig. 3, the electronic device displays the posted video list of the publisher of the currently playing video in the unfolded state within the list display area, and displays in the posted video list the publisher information of the publisher. Accordingly, when intending to enter the personal homepage of the publisher of the currently playing video to view the detailed information of the publisher, the user may trigger to publish the publisher information displayed in the video list. Correspondingly, upon detecting that the user triggers the publisher information displayed in the video play list, the electronic device may display the personal homepage of the publisher of the currently playing video, e.g., switching from the currently displayed page to the personal homepage of the publisher of the currently playing video or opening the personal homepage of the publisher of the currently playing video in a new page etc.

S303: in response to a trigger operation for a target collection tag displayed in the list display area, displaying in the list display area a collection video list of a video collection corresponding to the target collection tag.
wherein the target collection tag may be the collection tag triggered by the trigger operation.

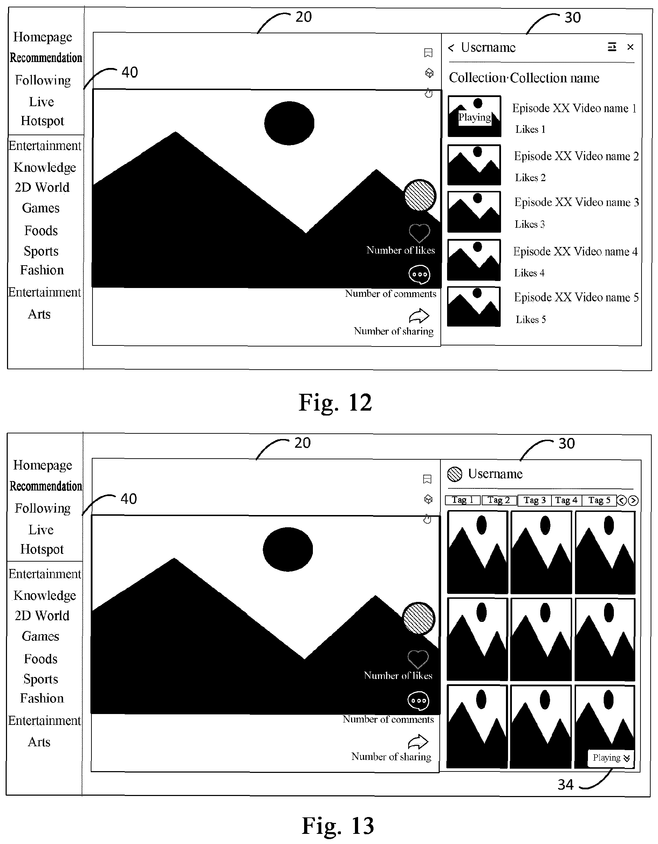

As an example, according to Fig. 3, the electronic device displays in the list display area the posted video list of the publisher of the currently playing video in the unfolded state and displays in the posted video list a collection tag 35 corresponding to the video collection posted by the publisher. Therefore, when intending to view the collection video list of a given video collection, the user may trigger the collection tag 35 corresponding to the video collection. Correspondingly, upon detecting that the user triggers a certain collection tag 35 displayed in the video play list, the electronic device may display in the list display area the collection video list of the video collection corresponding to the collection tag 35, as shown in Fig. 12.

S304: in response to a list folding instruction, switching the video list from the unfolded state to a folded state, wherein the list display area has a second display size when the video list is in the folded state, the second display size being smaller than the first display size.

S305: in response to a video item of the currently playing video being not displayed in the list display area, displaying a location tag in the list display area to indicate, via the location tag, a relative positional relationship between the video item of the currently playing video and video items displayed in the list display area within the video list.

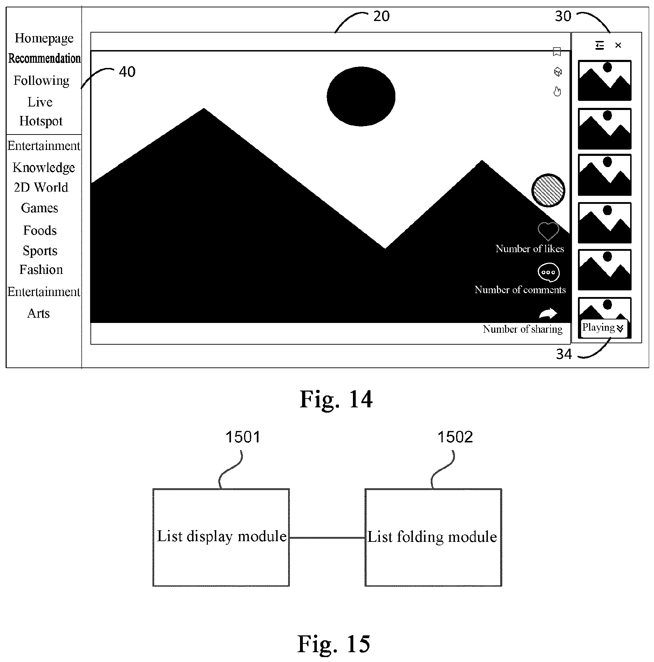

In this embodiment, when the video item of the currently playing video is displayed in the posted video list displayed in the list display area 30 and not within the list display area 30, the location tag 34 may be displayed in the list display area 30, as shown in Figs. 13 and 14. The location tag 34 indicates a relative positional relationship between the video item of the currently playing video and video items displayed in the list display area within the posted video list, so as to facilitate the user to determine the relative position of the video item of the current video through the location tag 34 and further carry out the search.

In one implementation, when the posted video list is displayed in response to the list display operation or the list folding instruction, the video item of the currently playing video may be located automatically, i.e., the display position of the video item in the list display area is automatically adjusted to display in the list display area the video item of the currently playing video. As such, the user may adjust the video item displayed in the list display area by scrolling the mouse wheel back and forth or clicking the corresponding direction keys in the keyboard. Correspondingly, upon detecting an adjustment operation by the user, the electronic device may control the video item displayed in the list display area to move with the adjustment operation of the user, and display the location tag in the list display area when the video item of the currently playing video is removed from the list display area, i.e., when the video item of the currently playing video could not be displayed in the list display area.

In a further implementation, when the posted video list is displayed in response to the list display operation or the list folding instruction, the video item of a preset video (e.g., the first video) in the posted video list may be located automatically. That is, when the video item of the preset video in the posted video list and a plurality of video items near this video item are displayed in the list display area, and the plurality of video items is free of the video item of the currently playing video, the location tag is displayed in the list display area. As such, the user may adjust the video item displayed in the list display area by scrolling the mouse wheel back and forth or clicking the corresponding direction keys in the keyboard. Correspondingly, upon detecting an adjustment operation by the user, the electronic device may control the video item displayed in the list display area to move with the adjustment operation of the user, and cancel the display of the location tag when the video item of the currently playing video is moved into the list display area, i.e., when the video item of the currently playing video can be displayed in the list display area.

Wherein when the location tag is displayed in the list display area, the direction indicated by the location identifier in the location tag may be a direction pointed from the video item displayed in the list display area to the video item of the currently playing video within the posted video list. When the video item of the currently playing video is located in the list display area, the video item of the currently playing video can be indicated by playing the identifier, as shown in Figs. 3 and 7.

S306: in response to a trigger operation for the location tag, controlling a plurality of video items displayed in the list display area to move simultaneously, and moving the video item of the currently playing video into the list display area for display.

In this embodiment, in addition to adjusting the video item displayed in the video list area by scrolling the mouse wheel or clicking the corresponding direction keys in the keyboard, the user also may instantly locate the video item of the currently playing video by triggering the location tag displayed in the list display area.

As an example, when intending to locate the video item of the currently playing video, the user may trigger (e.g., click) the location tag displayed in the list display area. Correspondingly, upon detecting that the user triggers the location tag, the electronic device may control a plurality of video items displayed in the list display area to move along or away from the direction indicated by the location tag, so as to move the video item of the currently playing video into the list display area for display.

The method for displaying a video list in accordance with the embodiment can display the personal homepage of the publisher of the currently playing video or the collection video list of different video collections posted by the publisher of the currently playing video, locate the video item of the currently playing video, simplify the operations required for the user to view the different videos posted by the publisher of the current video and to locate the video item of the current video, and further enhance the user experience.

Fig. 15 is a structural diagram of an apparatus for displaying a video list in accordance with the embodiments of the present disclosure. The apparatus may be implemented by software and/or hardware and may be configured in the electronic device. Typically, the apparatus may be disposed in the computer device, to execute the method for displaying the video list, thereby displaying the video list while watching the video. As shown in Fig. 15, the apparatus for displaying a video list in accordance with this embodiment may comprises: a list display module 1501 and a list folding module 1502; wherein:
the list display module 1501 is configured to display, in response to a list display operation, the video list corresponding to the list display operation in the unfolded state in a list display area of a video play page, wherein the video play page further includes a video play area for video playing, and the list display area has a first display size when the video list is in the unfolded state;
the list folding module 1502 is configured to switch, in response to a list folding instruction, the video list from the unfolded state to a folded state, wherein the list display area has a second display size when the video list is in the folded state, the second display size being smaller than the first display size.

The apparatus for displaying a video list in accordance with this embodiment displays, via the list display module, the video list corresponding to the list display operation in an unfolded state and in a list display area of a video play page in response to a list display operation, wherein the video play page further includes a video play area for video playing, and the list display area has a first display size when the video list is in the unfolded state; and switches, via the list folding module, the video list from the unfolded state to a folded state in response to a list folding instruction, wherein the list display area has a second display size when the video list is in the folded state, the second display size being smaller than the first display size. Through the above technical solution of the embodiment, the video list is displayed in different display states. On the condition that the video list is displayed, the influence on the video play area by the display of the video list is minimized, so as to satisfy the user's need of viewing the video list while watching the videos. In addition, since the video list is displayed, the user can view the video information of the videos in other pages without switching pages while the video is played in the currently displayed video play page. Therefore, the operations for the user to watch different types of videos are simplified and the viewing experience of the user is enhanced.

In the above solution, the list display module 1501 also may be configured to create in the video play page the list display area of the first display size and adjust the display size of the video play area according to the first display size before displaying the video list corresponding to the list display operation in the unfolded state in the list display area of the video play page; the list folding module 1502 may also be configured to adjust the display size of the video play area according to the second display size after switching the video list from the unfolded state to the folded state.

Optionally, the apparatus for displaying a video list in accordance with this embodiment also may include: a full screen play module configured to, in response to an operation for full screen play, expand the display size of the video play area and display the video list in the folded state; and/or a full screen exit module configured to, in response to an operation for exiting full screen play, reduce the display size of the video play area and display the video list in the unfolded state.

Optionally, the apparatus for displaying a video list in accordance with this embodiment also may include: a comment display module configured to, in response to an operation for viewing comments, display comment contents of a currently playing video in a comment display area of the video play page and display the video list in the folded state.

In the above solution, the comment display module also may be configured to, before displaying the comment contents of the currently playing video in the comment display area of the video play page, create the comment display area of a third display size in the video play page; and adjust the display size of the video play area according to the second display size and the third display size.

In the above solution, when the list display operation is performed on first publisher information displayed within the video play area, the video list is a posted video list from a publisher of a currently playing video; or when the list display operation is performed on a topic control, the video list is a topic video list of videos with a topic where the currently playing video is located; or when the list display operation is performed on a collection control, the video list is a collection video list of collection videos where the currently playing video is located; or when the list display operation is performed on a hotspot control, the video list is a hotspot video list.

In the above solution, the video list may be the posted video list. The apparatus for displaying a video list in accordance with this embodiment also may include: a tag display module configured to, in response to a video item of the currently playing video being not displayed in the list display area, display a location tag in the list display area to indicate, via the location tag, a relative positional relationship between the video item of the currently playing video and video items displayed in the list display area within the video list.

Optionally, the apparatus for displaying a video list in accordance with this embodiment also may include: a movement control module configured to, after displaying the location tag in the list display area, control a plurality of video items displayed in the list display area to move simultaneously, and move the video item of the currently playing video into the list display area for display in response to a trigger operation for the location tag.

In the above solution, the video list may be the posted video list. The apparatus for displaying a video list in accordance with this embodiment also may include: a homepage display module configured to, in response to a trigger operation for second publisher information displayed in the list display area, display a personal homepage of a publisher of the currently playing video.

In the above solution, the video list may be the posted video list. The apparatus for displaying a video list in accordance with this embodiment also may include: a collected video display module configured to, in response to a trigger operation for a target collection tag displayed in the list display area, display in the list display area a collection video list of a video collection corresponding to the target collection tag.

Optionally, the apparatus for displaying a video list in accordance with this embodiment also may include: a video switching module configured to, before adjusting the video list from the unfolded state to the folded state in response to a list folding instruction, generate a list folding instruction and switching from the currently playing video to the target video in response to a video switching instruction for switching from a currently playing video to a target video, wherein a video item of the target video is located in the video list and differs from videos played in the video play area before switching.

The apparatus for displaying a video list in accordance with this embodiment may execute the method for displaying a video list in accordance with any embodiment of the present disclosure, and comprise corresponding functional modules for implementing the method for displaying a video list. The technical details not elaborated in the embodiment may refer to the method in accordance with any embodiments of the present disclosure.

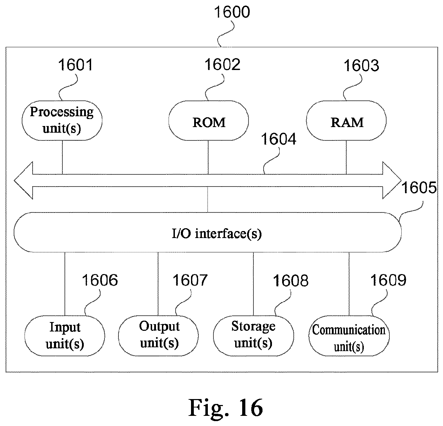

Fig. 16 illustrates a structural diagram of an electronic device (e.g., computer device) 1600 suitable for implementing the embodiments of the present disclosure. In the embodiments of the present disclosure, the terminal device may include, but not limited to, mobile terminals, such as mobile phones, notebooks, digital broadcast receivers, PDAs (Personal Digital Assistant), PADs, Portable Multimedia Players (PMPs) and vehicle terminals (such as car navigation terminal) and fixed terminals, e.g., digital televisions (TV) and desktop computers etc. The electronic device shown in Fig. 16 is just an example and will not put any restrictions on the functions and application ranges of the embodiments of the present disclosure.

According to Fig. 16, the electronic device 1600 may include a processing unit (e.g., central processor, graphic processor and the like) 1601, which can execute various suitable actions and processing based on the programs stored in the read-only memory (ROM) 1602 or programs loaded in the random-access memory (RAM) 1603 from a storage unit 1608. The RAM 1603 can also store all kinds of programs and data required by the operations of the electronic device 1600. Processing unit 1601, ROM 1602 and RAM 1603 are connected to each other via a bus 1604. The input/output (I/O) interface 1605 is also connected to the bus 604.

Usually, input unit 1606 (including touch screen, touchpad, keyboard, mouse, camera, microphone, accelerometer, gyroscope and like) and output unit 1607 (including liquid crystal display (LCD), speaker and vibrator etc.), storage unit 1608 (including tape and hard disk etc.) and communication unit 1609 may be connected to the I/O interface 1605. The communication unit 1609 may allow the electronic device 1600 to exchange data with other devices through wired or wireless communications. Although Fig. 16 illustrates the electronic device 1600 having various units, it is to be understood that it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a non-transient computer readable medium, wherein the computer programs include program codes for executing the method demonstrated by the flowchart. In these embodiments, the computer programs may be loaded and installed from networks via the communication unit 1609, or installed from the storage unit 1608, or installed from the ROM 1602. The computer programs, when executed by the processing unit 1601, performs the above functions defined in the method according to the embodiments of the present disclosure.

It is to be explained the above disclosed computer readable medium may be computer readable signal medium or computer readable storage medium or any combinations thereof. The computer readable storage medium for example may include, but not limited to, electric, magnetic, optical, electromagnetic, infrared or semiconductor systems, apparatus or devices or any combinations thereof. Specific examples of the computer readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same.

In the present disclosure, the computer readable signal medium may include a data signal propagated in baseband or as part of a carrier wave, carrying computer readable program codes therein. Such propagated data signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses or devices. Program codes contained on the computer readable medium may be transmitted by any suitable media, including but not limited to: electric wires, fiber optic cables and RF (radio frequency) etc., or any suitable combinations thereof.

In some implementations, clients and servers may communicate with each other via any currently known or to be developed network protocols, such as HTTP (HyperText Transfer Protocol) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any currently known or to be developed networks.

The above computer readable medium may be included in the aforementioned electronic device or stand-alone without fitting into the electronic device.

The above computer readable medium bears at least one program. When the above at least one program is executed by the electronic device, the electronic device is enabled to: in response to a list display operation, display in a list display area of a video play page the video list corresponding to the list display operation in an unfolded state, wherein the video play page further includes a video play area for video playing, and the list display area has a first display size when the video list is in the unfolded state; in response to a list folding instruction, switch the video list from the unfolded state to a folded state, wherein the list display area has a second display size when the video list is in the folded state, the second display size being smaller than the first display size.

Alternatively, the above computer readable medium carries one or more programs. When the above one or more programs are executed by the electronic device, the electronic device is enabled to: transmit to a server a received query content; in response to receiving a target query result transmitted by the server, determine a display position corresponding to a recommended word set according to a display sequence corresponding to the recommended word set indicated by the target query result, wherein the target query result includes the recommended word set and the display sequence, and a query result obtained based on the query content; the display sequence is determined by the server on the basis of query result quality information corresponding to the query content; the query result quality information is provided for indicating a matching degree between the query content and the query result; display, at the display position in the query result interface, a recommended word set corresponding to the query content.

The computer program instructions for executing operations of the present disclosure may be written in one or more programming languages or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flow chart and block diagram in the drawings illustrate system architecture, functions and operations that may be implemented by system, method and computer program product according to various implementations of the present disclosure. In this regard, each block in the flow chart or block diagram can represent a module, a part of program segment or code, wherein the module and the part of program segment or code include at least one executable instruction for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Units described in the embodiments of the present disclosure may be implemented by software or hardware. In some cases, the name of the unit should not be considered as the restriction over the unit per se.

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared or semiconductor systems, apparatus or devices or any combinations thereof. Specific examples of the machine readable storage medium may include, but not limited to, electrical connection having at least one wire, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof.

In accordance with at least one embodiment the present disclosure, the Example 1 provides method for displaying a video list, comprising:
in response to a list display operation, displaying, in a list display area of a video play page, the video list corresponding to the list display operation in an unfolded state, wherein the video play page further includes a video play area for video playing, and the list display area has a first display size when the video list is in the unfolded state;
in response to a list folding instruction, switching the video list from the unfolded state to a folded state, wherein the list display area has a second display size when the video list is in the folded state, the second display size being smaller than the first display size.

In accordance with at least one embodiment the present disclosure, Example 2 is directed to the method according to Example 1. The method comprises, before displaying the video list corresponding to the list display operation in the unfolded state in the list display area of the video play page:
creating in the video play page the list display area of the first display size and adjusting the display size of the video play area according to the first display size;
after switching the video list from the unfolded state to the folded state, the method further comprising: adjusting the display size of the video play area according to the second display size.

In accordance with at least one embodiment the present disclosure, Example 3 is directed to the method according to Example 1. The method comprises:
in response to an operation for full screen play, expanding the display size of the video play area and displaying the video list in the folded state;
in response to an operation for exiting full screen play, reducing the display size of the video play area and displaying the video list in the unfolded state.

In accordance with at least one embodiment the present disclosure, Example 4 is directed to the method according to Example 1. The method comprises:
in response to an operation for viewing comments, displaying comment contents of a currently playing video in a comment display area of the video play page and displaying the video list in the folded state.

In accordance with at least one embodiment the present disclosure, Example 5 is directed to the method according to Example 4. The method comprises, before displaying the comment contents of the currently playing video in the comment display area of the video play page:
creating the comment display area of a third display size in the video play page;
the method further comprises:
   adjusting the display size of the video play area according to the second display size and the third display size.

In accordance with at least one embodiment the present disclosure, Example 6 is directed to the method according to any of Examples 1-5.
When the list display operation is performed on first publisher information displayed within the video play area, the video list is a posted video list from a publisher of a currently playing video; or
When the list display operation is performed on a topic control, the video list is a topic video list of videos with a topic where the currently playing video is located; or
When the list display operation is performed on a collection control, the video list is a collection video list of collection videos where the currently playing video is located; or
When the list display operation is performed on a hotspot control, the video list is a hotspot video list.

In accordance with at least one embodiment the present disclosure, Example 7 is directed to the method according to Example 6. The video list is the posted video list and the method further comprises:
in response to a video item of the currently playing video being not displayed in the list display area, displaying a location tag in the list display area to indicate, via the location tag, a relative positional relationship between the video item of the currently playing video and video items displayed in the list display area within the video list.

In accordance with at least one embodiment the present disclosure, Example 8 is directed to the method according to Example 7. The method also comprises, after displaying the location tag in the list display area:
in response to a trigger operation for the location tag, controlling a plurality of video items displayed in the list display area to move simultaneously, and moving the video item of the currently playing video into the list display area for display.

In accordance with at least one embodiment the present disclosure, Example 9 is directed to the method according to Example 6. The video list is the posted video list and the method further comprises:
in response to a trigger operation for second publisher information displayed in the list display area, displaying a personal homepage of a publisher of the currently playing video.

In accordance with at least one embodiment the present disclosure, Example 10 is directed to the method according to Example 6. The video list is the posted video list and the method further comprises:
in response to a trigger operation for a target collection tag displayed in the list display area, displaying in the list display area a collection video list of a video collection corresponding to the target collection tag.

In accordance with at least one embodiment the present disclosure, Example 11 is directed to the method according to any of Examples 1-5. The method comprises, before adjusting the video list from the unfolded state to the folded state in response to a list folding instruction:
in response to a video switching instruction for switching from a currently playing video to a target video, generating a list folding instruction and switching from the currently playing video to the target video, wherein a video item of the target video is located in the video list and differs from videos played in the video play area before switching.

In accordance with at least one embodiment the present disclosure, Example 12 is directed to an apparatus for displaying a video list, comprising:
a list display module for displaying, in response to a list display operation and in a list display area of a video play page, the video list corresponding to the list display operation in an unfolded state, wherein the video play page further includes a video play area for video playing, and the list display area has a first display size when the video list is in the unfolded state;
a list folding module for switching, in response to a list folding instruction, the video list from the unfolded state to a folded state, wherein the list display area has a second display size when the video list is in the folded state, the second display size being smaller than the first display size.

In accordance with at least one embodiment the present disclosure, Example 13 is directed to an electronic device, comprising:
at least one processor; and
a memory configured to store at least one program;
the at least one program, when executed by the at least one processor, causing the at least one processor to implement the method for displaying a video list according to any of Examples 1-11.

In accordance with at least one embodiment the present disclosure, Example 14 is directed to a computer readable storage medium having a computer program stored thereon, the computer program, when executed by a processor, implementing the method for displaying a video list according to any of Examples 1-11.

Furthermore, although the respective operations are depicted in a particular order, it should be appreciated that the operations are not required to be completed in the particular order or in succession. In some cases, multitasking or multiprocessing is also beneficial. Likewise, although the above discussion comprises some particular implementation details, they should not be interpreted as limitations over the scope of the present disclosure. Some features described separately in the context of the embodiments of the description can also be integrated and implemented in a single embodiment. Conversely, all kinds of features described in the context of a single embodiment can also be separately implemented in multiple embodiments or any suitable sub-combinations.

## Claims

1. A method for displaying a video list, comprising:
in response to a list display operation, displaying the video list corresponding to the list display operation in an unfolded state in a list display area of a video play page, wherein the video play page further includes a video play area for video playing, and the list display area has a first display size when the video list is in the unfolded state;
in response to a list folding instruction, switching the video list from the unfolded state to a folded state, wherein the list display area has a second display size when the video list is in the folded state, the second display size being smaller than the first display size.

2. The method of claim 1, further comprising:
before displaying the video list corresponding to the list display operation in the unfolded state in the list display area of the video play page, creating, in the video play page, the list display area having the first display size and adjusting the display size of the video play area according to the first display size; and
after switching the video list from the unfolded state to the folded state, adjusting the display size of the video play area according to the second display size.

3. The method of claim 1, further comprising at least one of the following:
in response to an operation for full screen play, expanding the display size of the video play area and displaying the video list in the folded state;
in response to an operation for exiting full screen play, reducing the display size of the video play area and displaying the video list in the unfolded state.

4. The method of claim 1, further comprising:
in response to an operation for viewing comments, displaying comment contents of a current playing video in a comment display area of the video play page and displaying the video list in the folded state.

5. The method of claim 4, further comprising:
before displaying the comment contents of the current playing video in the comment display area of the video play page, creating the comment display area of a third display size in the video play page; and
adjusting the display size of the video play area according to the second display size and the third display size.

6. The method of any of claims 1-5, wherein,
when the list display operation is performed on first publisher information displayed within the video play area, the video list is a posted video list from a publisher of a current playing video; or
when the list display operation is performed on a topic control, the video list is a topic video list of videos with a topic where the current playing video is located; or
when the list display operation is performed on a collection control, the video list is a collection video list of collected videos where the current playing video is located; or
when the list display operation is performed on a hotspot control, the video list is a hotspot video list.

7. The method of claim 6, wherein the video list is the posted video list and the method further comprises:
in response to a video item of the current playing video being not displayed in the list display area, displaying a location tag in the list display area to indicate, via the location tag, a relative position relationship between the video item of the current playing video and video items displayed in the list display area within the video list.

8. The method of claim 7, wherein after displaying the location tag in the list display area, method further comprises:
in response to a trigger operation for the location tag, controlling a plurality of video items displayed in the list display area to move simultaneously, and moving the video item of the current playing video into the list display area for display.

9. The method of claim 6, wherein the video list is the posted video list, and the method further comprises:
in response to a trigger operation for second publisher information displayed in the list display area, displaying a personal homepage of a publisher of the current playing video.

10. The method of claim 6, the video list is the posted video list, and the method further comprises:
in response to a trigger operation for a target collection tag displayed in the list display area, displaying in the list display area a collection video list of a video collection corresponding to the target collection tag.

11. The method of any of claims 1-5, wherein before adjusting the video list from the unfolded state to the folded state in response to a list folding instruction, the method further comprises:
in response to a video switching instruction for switching from a current playing video to a target video, generating a list folding instruction and switching from the current playing video to the target video, wherein a video item of the target video is located in the video list and differs from videos played in the video play area before switching.

12. An apparatus for display a video list, comprising:
a list display module for displaying, in response to a list display operation, the video list corresponding to the list display operation in an unfolded state in a list display area of a video play page, wherein the video play page further includes a video play area for video playing, and the list display area has a first display size when the video list is in the unfolded state;
a list folding module for switching, in response to a list folding instruction, the video list from the unfolded state to a folded state, wherein the list display area has a second display size when the video list is in the folded state, the second display size being smaller than the first display size.

13. An electronic device, comprising:
at least one processor; and
a memory configured to store at least one program;
the at least one program, when executed by the at least one processor, causing the at least one processor to implement the method for displaying a video list according to any of claims 1-11.

14. A computer readable storage medium having a computer program stored thereon , the computer program, when executed by a processor, implementing the method for displaying a video list according to any of claims 1-11.
